(19) Europäisches Patentamt
European Patent Office
Office européen des brevets

(11) **EP 4 075 328 A1**

(12) **EUROPEAN PATENT APPLICATION**

(43) Date of publication:
**19.10.2022 Bulletin 2022/42**

(21) Application number: **21180769.8**

(22) Date of filing: **22.06.2021**

(51) International Patent Classification (IPC):
**G06K 9/62** *(2022.01)* **G06K 9/00** *(2022.01)*

(52) Cooperative Patent Classification (CPC):
**G06K 9/627; G06K 9/629; G06V 10/82; G06V 20/64**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2021 CN 202110402765**

(71) Applicants:
• **Ocean University of China**
 **Qingdao, Shandong 266100 (CN)**
• **Qingdao National Laboratory for Marine Science and Technology Development Center**
 **266237 Qingdao Shandong (CN)**

(72) Inventors:
• **WEI, Zhiqiang**
 **Qingdao (CN)**
• **JIA, Dongning**
 **Qingdao (CN)**
• **XU, Jiali**
 **Qingdao (CN)**
• **YIN, Bo**
 **Qingdao (CN)**
• **HUANG, Xianqing**
 **Qingdao (CN)**
• **MA, Mengfei**
 **Qingdao (CN)**

(74) Representative: **Huang, Liwei**
 **Cäcilienstraße 12**
 **40597 Düsseldorf (DE)**

(54) **METHOD AND DEVICE FOR CLASSIFYING AND SEARCHING FOR A 3D MODEL ON BASIS OF DEEP ATTENTION**

(57) The application discloses a method and a device of classifying and/or retrieving a three-dimensional model on basis of depth attention. The method of classifying and/or retrieving the three-dimensional model on basis of depth attention comprises the steps of: acquiring a three-dimensional model to be retrieved; mapping to generate a group of two-dimensional views according to the three-dimensional model to be retrieved, wherein the group of two-dimensional views comprises at least two two-dimensional views; acquiring features of each two-dimensional view; fusing the features of all two-dimensional views via a depth attention network to form a fused feature; and retrieving or classifying the three-dimensional model to be retrieved according to the fused feature. By introducing a self-attention structure, correlation information among multiple views can be fully considered from a global angle to mine hidden information and reduce information redundancy.

EP 4 075 328 A1

**Description**

**Technical Field**

The invention relates to the technical field of three-dimensional model retrieval classification, in particular to a method of classifying and/or retrieving a three-dimensional model on basis of depth attention, and a device of classifying and/or retrieving a three-dimensional model on basis of depth attention.

**Background Art**

Three-dimensional shape recognition is an important issue in the computer field. In recent years, more research attention has been paid due to its wide application in practical scenes such as computer aided design, virtual reality and industrial product design. Meanwhile, with the development of three-dimensional acquisition technology, it becomes more convenient to acquire a large amount of three-dimensional shape data, which puts forward higher and higher requirements for three-dimensional shape recognition algorithm. Due to the rapid development of data-driven deep learning techniques, research on various deep neural networks, such as, pointNet, VoxNet, and 3D Shapentet, should be used for the three-dimensional shape recognition. Among these methods, the view-based method performs better. Because the view-based method focus on view information, they can take advantage of established models, such as VGG, GoogleNet, and ResNet, for extracting visual features. These typical deep learning models can effectively improve the performance of model characterization.

The key point of 3D shape recognition is the design of descriptors. Based on the development of deep learning, many methods of 3D shape recognition based on view are proposed. Klokov etc. propose a KD network that can handle unstructured point clouds. A kd-tree is used for subdivision calculation of point clouds.

The existing three-dimensional model classification and/or retrieval problems are as follows.

1) Because of the large amount of data in 3D model, how to efficiently learn the distinguishing features and reduce the amount of calculation is a significant challenge.

2) The view-based method can not effectively deal with the fusion of effective information and the removal of redundant information among views simultaneously, which can result in the interference of redundant information to the fusion of effective information, or reduce the fusion ability of effective information when removing redundant information.

Accordingly, it would be desirable to have a solution to overcome or at least mitigate at least one of the above-mentioned disadvantages of the prior art.

**Summary of the Invention**

It is an object of the present invention to provide a method of classifying and/or retrieving a three-dimensional model on basis of depth attention for overcoming or at least mitigating at least one of the above-mentioned disadvantages of the prior art.

In an aspect of the present invention, a method of classifying and/or retrieving a three-dimensional model on basis of depth attention is provided, the method of classifying and/or retrieving the three-dimensional model on basis of depth attention comprising:

acquiring a three-dimensional model to be retrieved;

mapping to generate a group of two-dimensional views according to the three-dimensional model to be retrieved, wherein the group of two-dimensional views comprises at least two two-dimensional views;

acquiring features of each two-dimensional view;

fusing the features of all two-dimensional views via a depth attention network to form a fused feature; and

retrieving or classifying the three-dimensional model to be retrieved according to the fused feature.

Optionally, the mapping to generate a group of two-dimensional views according to the three-dimensional model to be retrieved, the group of two-dimensional views comprising at least two two-dimensional views, comprises:

extracting two-dimensional views of the three-dimensional models at different angles and/or distances by using a phong algorithm, and extracting features of each view by using a GoogleNet network.

Optionally, the extracting two-dimensional views of the three-dimensional models at different angles and/or distances by using the phong algorithm, and extracting features of each view by using a GoogleNet network comprises: generating views by a three-dimensional phong reflection algorithm, wherein the views are placed at intervals of $\theta=30$ around an axis in a perpendicular direction at an angle of 30 degrees with the ground plane, with each camera pointing to the centroid of the grid.

Optionally, the depth attention network comprises n processing layers; a first processing layer is a convolution layer, a last processing layer is called a splicing layer, and other processing layers are called self-attention layers.

Optionally, the fusing the features of all two-dimensional views via a depth attention network to form a fused feature comprises:

stacking all the self-attention layers, wherein one self-attention layer is connected with the convolution layer to serve as a first self-attention layer, and one self-attention layer is connected with the splicing layer to serve as a last self-attention layer; except the first self-attention layer, the splicing layer is configured for acquiring the sum of the input and the output of the last self-attention layer; wherein,

the convolution layer is configured for acquiring a feature matrix according to the features of all two-dimensional views;

the splicing layer is configured for splicing the sum of the input and the output of the last self-attention layer into the fused feature;

the first self-attention layer performs following operations to acquire the sum of the input and the output of the present layer:

acquiring a self-defined weight matrix of the present layer, wherein the self-defined weight matrix comprises $W_i^Q$, $W_i^K$ and $W_i^v$;

acquiring the feature matrix output by the convolution layer;

acquiring a weight matrix of the present layer according to the feature matrix, and the self-defined weight matrix $W_i^Q$ and $W_i^K$ of the present layer by a softmax function;

generating a self-attention feature matrix of the present layer according to the weight matrix, the self-defined weight matrix $W_i^v$ of the present layer and the feature matrix;

adding the self-attention feature matrix of the present layer and the feature matrix to obtain the sum of the input and the output of the present layer;

each of other self-attention layers except the first self-attention layer perform following operations to acquire the sum of the input and the output:

acquiring the sum of the input and the output of the previous self-attention layer;

acquiring a self-defined weight matrix of the present layer, wherein the self-defined weight matrix comprises $W_i^Q$, $W_i^K$ and $W_i^v$;

acquiring a weight matrix of the present layer according to the sum of the input and the output of the previous self-attention layer and the self-defined weight matrix $W_i^Q$ and $W_i^K$ of the present layer by the softmax function;

generating a self-attention feature matrix of the present layer according to the weight matrix and the self-defined weight matrix $W_i^v$ of the present layer and the sum of the input and the output of the previous self-attention layer ; and

adding the self-attention feature matrix of the present layer and the sum of the input and the output of the previous self-attention layerto obtain the sum of the input and the output of the present layer.

Optionally, the generating a self-attention feature matrix of the present layer according to the weight matrix, the self-defined weight matrix $W_i^v$ of the present layer and the feature matrix comprises:

generating a self-attention feature matrix of the present layer by multiplying the weight matrix, the self-defined weight matrix $W_i^v$ and the feature matrix;

the generating a self-attention feature matrix of the present layer according to the weight matrix and the self-defined weight matrix $W_i^v$ of the present layer and the sum of the input and the output of the previous self-attention layer comprises:
generating the self-attention feature matrix of the present layer by multiplying the weight matrix, the self-defined weight matrix $W_i^v$ and the sum of the input and the output of the previous self-attention layer.

Optionally, the retrieving or classifying the three-dimensional model to be retrieved according to the fused feature comprises:

inputting the fused feature into a trained classifier to acquire a classification label; or

inputting the fused feature into a preset database to find a three-dimensional model corresponding to the feature matched with the fused feature from the preset database.

The invention also provides a device of classifying and/or retrieving a three-dimensional model on basis of depth attention, wherein the device of classifying and/or retrieving the three-dimensional model on basis of depth attention comprises:

an acquisition module configured for acquiring three-dimensional model to be retrieved;

a two-dimensional view group generation module configured for mapping to generate a group of two-dimensional views according to the three-dimensional model to be retrieved, wherein the group of two-dimensional views comprises at least two two-dimensional views;

a two-dimensional view feature acquisition module configured for acquiring features of each two-dimensional view;

a fused feature generation module configured for fusing the features of all two-dimensional views via a depth attention network to form a fused feature; and

a retrieval or classification module configured for retrieving or classifying the three-dimensional model to be retrieved according to the fused feature.

The application also provides an electronic apparatus comprising a memory, a processor and a computer program stored in the memory and operable on the processor, wherein the processor, when executing the computer program, implements the method of classifying and/or retrieving the three-dimensional model on basis of depth attention as described above.

The application also provides a computer-readable storage medium storing a computer program, wherein the computer program, when executed by a processor, is capable of implementing a method of classifying and/or retrieving the three-dimensional model on basis of depth attention as described above.

Beneficial effects

1. According to the application, the pre-training CNN network is used for extracting the view feature, so that the detailed information of the view can be extracted by fully utilizing the previously learned capability; and meanwhile, a large calculation amount is reduced, so that the training time is shortened.

2. By introducing a self-attention structure, correlation information among multiple views can be fully considered from a global angle to mine hidden information and reduce information redundancy.

3. According to the invention, a feed-forward network is used after the self-attention layer, and the robustness of the network structure is enhanced by combining shallow and deep information of the network.

4. By increasing the depth of the self-attention layer and combining the characteristics of the self-attention layer, effective information is gradually fused and concentrated on a few typical views, and the description capability of the characteristics of the views is enhanced.

5. By means of comparative experiments, the application proves to be superior to the method based on multiple views, and proves the capability of fusing effective information and removing redundant information.

**Brief Description of the Drawings**

Fig. 1 is a flow diagram of a method and a device of classifying and/or retrieving a three-dimensional model on basis of depth attention according to a first embodiment of the present application.

Fig. 2 is an exemplary structure diagram of an electronic apparatus capable of implementing the method of classifying and/or retrieving a three-dimensional model on basis of depth attention according to an embodiment of the application.

**Detailed Description of the Invention**

In order to make the objectives, technical solutions, and advantages of the embodiments of the present application more obvious, the technical solutions in the embodiments of the present application will be described in detail in conjunction with the accompanying drawings in the embodiments of the present application. Throughout the drawings, the same or similar reference numerals indicate the same or similar elements or elements having the same or similar function. The described embodiments are some, but not all, embodiments of the present application. The embodiments described below by reference to the drawings are exemplary, and they are intended to be illustrative of the present application and are not to be construed as limiting the present application. Based on the embodiments in the present application, all other embodiments obtained by a person skilled in the art without involving any inventive effort are within the scope of protection of the present application. The embodiments of this application are described in detail in combination with the accompanying drawings below.

In the description of the present application, it should be understood that the directional or positional relationships indicated by the terms "center", "longitudinal", "transverse", "front", "rear", "left", "right", "vertical", "horizontal", "top", "bottom", "inner", "outer" and the like are based on the directional or positional relationships shown in the drawings. It is merely for the purpose of describing the present application and simplifying the description, and is not intended to indicate or imply that a particular orientation, configuration and operation of the referenced device or element is required and should not be construed as limiting the scope of the present application.

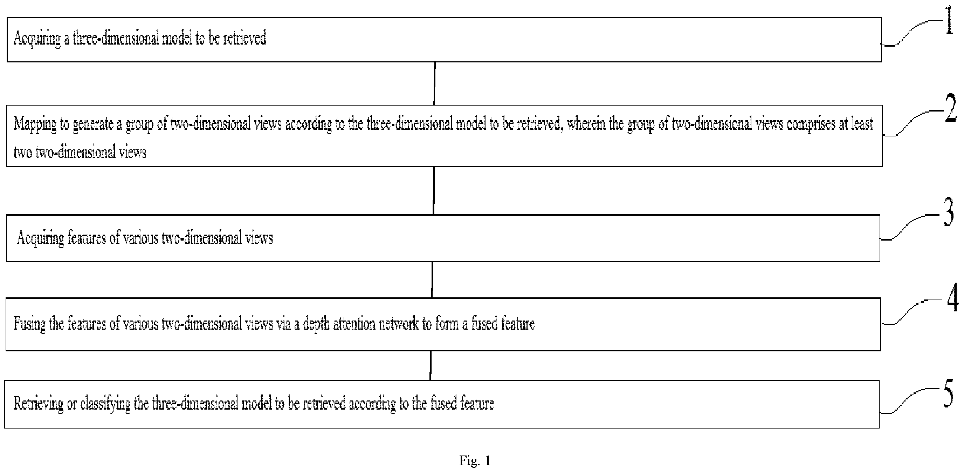

Fig. 1 is a flow diagram of a method and a device of classifying and/or retrieving a three-dimensional model on basis of depth attention according to a first embodiment of the present application.

The method of classifying and/or retrieving the three-dimensional model on basis of depth attention shown in Fig. 1 includes:

Step 1: acquiring a three-dimensional model to be retrieved;

Step 2: mapping to generate a group of two-dimensional views according to the three-dimensional model to be retrieved, wherein the group of two-dimensional views comprises at least two two-dimensional views;

Step 3: acquiring features of each two-dimensional view;

Step 4: fusing the features of all two-dimensional views via a depth attention network to form a fused feature; and

Step 5: retrieving or classifying the three-dimensional model to be retrieved according to the fused feature.

Beneficial effects

1. According to the application, the pre-training CNN network is used for extracting the view feature, so that the detailed information of the view can be extracted by fully utilizing the previously learned capability; and meanwhile, a large calculation amount is reduced, so that the training time is shortened.

2. By introducing a self-attention structure, correlation information among multiple views can be fully considered from a global angle to mine hidden information and reduce information redundancy.

3. According to the invention, a feed-forward network is used after the self-attention layer, and the robustness of the network structure is enhanced by combining shallow and deep information of the network.

4. By increasing the depth of the self-attention layer and combining the characteristics of the self-attention layer, effective information is gradually fused and concentrated on a few typical views, and the description capability of the characteristics of the views is enhanced.

5. By means of comparative experiments, the application proves to be superior to the method based on multiple views, and proves the capability of fusing effective information and removing redundant information.

According to the embodiment, the mapping to generate a group of two-dimensional views according to the three-dimensional model to be retrieved, the group of two-dimensional views comprising at least two two-dimensional views, comprises:
extracting two-dimensional views of the three-dimensional models at different angles and/or distances by using a phong algorithm, and extracting features of each view by using a GoogleNet network.
In the embodiment, the extracting two-dimensional views of the three-dimensional models at different angles and/or distances by using the phong algorithm, and extracting features of each view by using a GoogleNet network comprises:
generating views by a three-dimensional phong reflection algorithm, wherein the views are placed at intervals of $\theta=30$ around an axis in a perpendicular direction at an angle of 30 degrees with the ground plane, with each camera pointing to the centroid of the grid.
In the embodiment, the depth attention network comprises n processing layers; a first processing layer is a convolution layer, a last processing layer is called a splicing layer, and other processing layers are called self-attention layers.
In the present embodiment, the fusing the features of all two-dimensional views via a depth attention network to form a fused feature comprises:

stacking all the self-attention layers, wherein one self-attention layer is connected with the convolution layer to serve as a first self-attention layer, and one self-attention layer is connected with the splicing layer to serve as a last self-attention layer; except the first self-attention layer, the splicing layer is configured for acquiring the sum of the input and the output of the last self-attention layer; wherein,

the convolution layer is configured for acquiring a feature matrix according to the features of all two-dimensional views;

the splicing layer is configured for splicing the sum of the input and the output of the last self-attention layer into the fused feature;

the first self-attention layer performs following operations to acquire the sum of the input and the output of the present layer:

acquiring a self-defined weight matrix of the present layer, wherein the self-defined weight matrix comprises $W_i^Q$

, $W_i^K$ and $W_i^v$ ; acquiring the feature matrix output by the convolution layer;

acquiring a weight matrix of the present layer according to the feature matrix, and the self-defined weight matrix $W_i^Q$ and $W_i^K$ of the present layer by the softmax function;

generating a self-attention feature matrix of the present layer according to the weight matrix and the self-defined weight matrix $W_i^v$ of the present layer and the feature matrix;

adding the self-attention feature matrix of the present layer and the feature matrix to obtain the sum of the input and the output of the present layer;

each of other self-attention layers except the first self-attention layer perform following operations to acquire the sum of the input and the output:

acquiring the sum of the input and the output of a previous self-attention layer;

acquiring a self-defined weight matrix of the present layer, wherein the self-defined weight matrix comprises $W_i^Q$ , $W_i^K$ and $W_i^v$ ;

acquiring a weight matrix of the present layer according to the sum of the input and the output of the previous self-attention layer and the self-defined weight matrix $W_i^Q$ and $W_i^K$ of the present layer by the softmax function;

generating a self-attention feature matrix of the present layer according to the weight matrix and the self-defined weight matrix $W_i^v$ of the present layer and the sum of the input and the output of the previous self-attention layer; and

adding the self-attention feature matrix of the present layer and the sum of the input and the output of the previous self-attention layer to obtain the sum of the input and the output of the present layer.

In the embodiment, the generating a self-attention feature matrix of the present layer according to the weight matrix, the self-defined weight matrix $W_i^v$ of the present layer and the feature matrix comprises:

generating a self-attention feature matrix of the present layer by multiplying the weight matrix, the self-defined weight matrix $W_i^v$ and the feature matrix;

the generating a self-attention feature matrix of the present layer according to the weight matrix and the self-defined weight matrix $W_i^v$ of the present layer and the sum of the input and the output of the previous self-attention layer comprises:
generating the self-attention feature matrix of the present layer by multiplying the weight matrix, the self-defined weight matrix $W_i^v$ and the sum of the input and the output of the previous self-attention layer.

In the embodiment, the retrieving or classifying the three-dimensional model to be retrieved according to the fused feature comprises:

inputting the fused feature into a trained classifier to acquire a classification label; or

inputting the fused feature into a preset database to find a three-dimensional model corresponding to the feature matched with the fused feature from the preset database.

The application is described in further detail below by way of example, and it should be understood that this example is not to be construed as limiting the present application in any way.

Embodiment 1

The method of classifying and/or retrieving the three-dimensional model on basis of depth attention mainly comprises two parts: firstly, generating two-dimensional views and extracting features of the views; second, optimizing the representation ability of multiple views by the depth attention, fusing the effective information of multiple views, and removing redundant information.

The method provided by the embodiment of the invention is a method for effectively fusing information among views for classification and/or retrieval on basis of depth attention. The specific implementation steps are as follows:

Step 1: acquiring a three-dimensional model to be retrieved;

Step 2: mapping to generate a group of two-dimensional views according to the three-dimensional model to be retrieved, wherein the group of two-dimensional views comprises at least two two-dimensional views, and specifically, mapping the three-dimensional model to be retrieved into a group of two-dimensional views by using an algorithm;

Step 3: acquiring features of each two-dimensional view, and specifically, extracting the features of each view by using a pre-training convolution network;

Step 4: fusing the features of all two-dimensional views via a depth attention network to form a fused feature, specifically, combining all view features of the same three-dimensional model into a feature matrix, weighting the information of the feature matrix by a self-attention layer, enhancing the robustness of the network by using a feed-forward structure, and then adding multiple layers of the same self-attention layer, so that fusion information is gradually fused on a typical view.

Step 5: retrieving or classifying the three-dimensional model to be retrieved according to the fused feature. In particular, the multi-view features are fused into a feature vector to represent a three-dimensional model, which is further optimized and applied to classification and/or retrieval tasks via a fully connected layer finally.

According to the embodiment, the mapping to generate a group of two-dimensional views according to the three-dimensional model to be retrieved, the group of two-dimensional views comprising at least two two-dimensional views, comprises:

1) acquiring a view every 30 degrees around an axis in a perpendicular direction of the three-dimensional model by using the phong algorithm. Meanwhile, the angle between the view and the ground plane is 30 degrees, so that more detailed information can be obtained. Although more views provide more information, more redundant information is introduced and the effect is reduced. Meanwhile, the similar three-dimensional models are aligned in space, and orderly correspondence of views generated by the similar three-dimensional models is guaranteed. According to the invention, the input view features are input into a subsequent network as an ordered vector group, and unordered input can interfere with the integration of view information.

2) The present invention uses the trained GooglNet (containing the fully connected layer) that extracts a 4096-dimensional feature vector from the input view. A three-dimensional model consists of a set of feature views $f = \{f_1, f_2,..., f_N\}$ ($f_i$ representing a view feature). As the three-dimensional models are aligned, the output feature vectors are also ordered.

The fusing the features of all two-dimensional views via a depth attention network to form a fused feature comprises:
in the previous step, obtaining the view features $f$ ($f = \{f_1, f_2,..., f_N\}$, $f$ is the sum of the features of all two-dimensional views, and $f_i$ is the features of an $i^{th}$ two-dimensional view) of the three-dimensional model, and inputting a feature matrix combined by the features therein into the self-attention layer. Firstly, the self-attention layer converts each view feature by using three learnable weight matrices $W_i^Q$, $W_i^K$ and $W_i^v$, wherein $W_i^Q \in R^{d \times d_k}$, $W_i^K \in R^{d \times d_k}$ and $W_i^v \in R^{d \times d_v}$; and three corresponding vector matrices $F_q$, $F_k$ and $F_v$ are obtained. Then $F_q$ and $F_k$ are performed

with the matrix operation, and softmax processing is performed on each column of the result to obtain a weight matrix corresponding to each view.

Finally, $F_v$ is converted into $N$ feature vectors by the weight matrix, and the number and the dimension of the feature vector are consistent with those of the input feature vector.

In order to make full use of the initial correlation information in multiple views and improve the robustness of the network, we add the input and output of the current layer as the input of the next self-attention layer. Two adjacent layers in this process can be represented as follows: $F^{i+1} = Attention(F^i) + F^i$;

wherein, $Attention(F^i)$ represents a self-attention feature matrix of an $i^{th}$ self-attention layer; $F^i$ represents the sum of the input and the output of the previous self-attention layer, wherein when i is equal to 0, $F^i$ represents the feature matrix output by the convolution layer.

Cascaded self-attention layers can effectively fuse multi-view information. The number and the dimension of the feature vectors input and output by each self-attention layer are the same, and a plurality of self-attention layers are directly cascaded according to the characteristic. As the depth increases, effective information fusion is facilitated, and the fused information is concentrated on a typical view to remove redundant information. As learning progresses, the highest weight per layer is concentrated on the same view. The depth attention network focuses on the depth of attention units, which can explore a higher level of relevance. By increasing the depth of the attention layer, effective information can be gradually extracted and fused. In addition, redundant information may be removed because the depth attention network focuses only on differentiated typical views.

The splicing layer is configured for splicing the output of the last self-attention layer into the fused feature.

The fused feature is a feature vector to characterize the three-dimensional model to be retrieved, and the fully connected layer is used for further optimization.

During the fusion, the sum of the input and the output of the last self-attention layer is directly spliced into a one-dimensional vector at the splicing layer, namely, $N{\times}M \to 1{\times}N^*M$, direct use of maximum pooling will cause lost important information, resulting in a decrease in the ability of multi-view feature fused one-dimensional vector to describe the three-dimensional model.

The invention has two executable fusion schemes.

The sum of the input and output of the last self-attention layer is fused together, so that the information of all views can be fully applied.

Two view features with the largest weight from the sum of the input and the output of the last self-attention layer are selected for fusion. As the depth of the self-attention layer increases, the effective information fusion of multiple views gradually focuses on the typical view, showing that the corresponding weight value of the typical view is larger.

The input to the fully connected layer is equivalent to performing weighting processing again, and the spliced feature vectors is further fused to represent the three-dimensional model. The vector output by the last but one layer is taken as the representation of the three-dimensional model so as to perform retrieval tasks. Softmax is added after the fully connected layer to perform the classification task directly.

The above can be performed independently, so that the training time can be mainly used for depth attention network learning.

Embodiment 2

For the generation of the two-dimensional view and the extraction of the view features, firstly, the placement of the virtual camera position is designed to obtain more three-dimensional model details. The feature vector of the view is obtained through a convolution neural network.

The original three-dimensional model is mesh data, so that a closed three-dimensional model can be obtained in a three-dimensional space. The phong algorithm simulates a camera, which takes 12 different angular views. Meanwhile, the space position can be set, the the winding angle around z is {0°;30°;60°;90°;120°;150°;180°;210°;240°;270°;300°;330°}, with the included angle 30° with the horizontal direction.

Each view is sized as 300 × 300 and entered into the pre-trained GoogleNet. Finally, the feature vector with the dimension of 4096 is output at the last but one layer of the network.

12 views from the same model are combined into a 12×4096 matrix as the initial description of the model. For the depth attention layer, the multi-level self-attention layer performs weighting processing on the multi-view features, effective information is fused, and redundancy is removed.

As can be seen from the above, each model is represented by a 12×4096 feature matrix $F$. In a self-attention layer, a learnable weight matrix $W^Q$ with the dimension of 4096×64 is used, and $W^K$ and $W^V$ are multiplied by an input feature matrix respectively to obtain a matrix $S_q$, $S_k$ and $S_v$ with the dimension 12×64.

$S_q$ is multiplied with $S_k$, and multiplied by a constant $1 / \sqrt{d_k}$ to control the magnitude, and the softmax operation is performed on columns of the matrix to obtain a normalized weight matrix *A* with the dimension of 12×12.

The specific formula is as follows:

$$Attention(F) = softmax(\frac{F\Pi^{Q} \cdot (F\Pi^{K})^{T}}{\sqrt{d_{k}}})F\Pi^{V}$$

$$= \Pi_{F}F\Pi^{V}$$ ;

wherein $d_k$ is the dimension of the input feature vector, and $1/\sqrt{d_k}$ is introduced to control the magnitude of the weight.

Then *A* is multiplied with $S_v$ to obtain a new feature vector matrix representing the three-dimensional model.

The output feature vector and the input feature vector are added, two-layer full connection processing is performed for outputting a 12×4096 matrix. The above constitutes a completed self-attention layer. The 12 × 4096 matrix here will serve as the input to the next self-attention layer.

Six self-attention layers are connected in cascade to form a depth attention layer, effective information of multiple views is fully fused, and redundant information is reduced step by step.

For multi-view feature fusion,

1) Twelve 4096-dimensional feature vectors output by the optimal self-attention layer are directly spliced to 1×12*4096, then performed with full-connection processing, and finally performed with softmax and learning by using cross entropy in the classification task. After the classification task is trained, the vector of full-connection last but one layer 4096 is output for retrieval.

2) alternatively, only the features corresponding to the two views with the highest weight is selected, and spliced into the a 1×2*4096 vector for representing the three-dimensional model.

In summary, according to the embodiment of the invention, gradual fusion of multi-view information is introduced in detail by the the steps, the effective information is gradually concentrated on the typical view, the redundant information among the views is reduced, and expression capability of final three-dimensional model features is improved.

Embodiment 3

The feasibility of the schemes in Embodiments 1 and 2 is demonstrated below in conjunction with specific examples, which are described in detail below.

The invention is tested on the Princeton ModelNet data set. MdelNet consists of 622 categories of 127915 three-dimensional CAD models. We further downsample ModelNet40 as a subset of ModelNet, which contains 12311 CAD models of 40 categories. These models are cleaned manually, but are not standard in posture. The ModelNet40 training and testing subsets consist of 9843 and 2468 models, respectively.

Compared with a multi-head attention network, the invention proves the advantages of the deep network, and the experimental results are shown in table 1. The multiple heads are arranged as {1;2;4;6;8}, and the self-attention layer has only one layer. The comparison scheme is a network with 6 and 8 single-head self-attention layers.

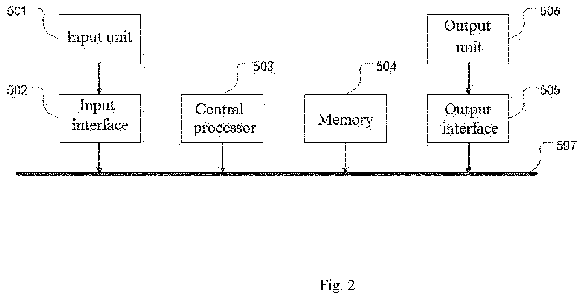

At the same time, the present invention performs comparative experiments with some of the currently best methods. We show the output performance of three typical model-based methods, including: SPH, LFD, and 3D ShapeNets, many typical view-based methods, such as, MVCNN, MVCNN-MultiRes and GVCNN, some typical point cloud-based models like PointNet, PointNet++ and PointCNN, and a typical panorama-based method, PANORAMA-NN, for extended contrast. as shown in Fig. 2.

Table 1

| Number of head | Classification (Overall Accuracy) | Retrieval (mAP) |
|---|---|---|
| 1 | 89.1% | 82.4% |
| 2 | 89.5% | 83.3% |
| 4 | 89.4% | 83.1% |
| 6 | 89.6% | 83.5% |
| 8 | 89.5% | 83.1% |

(continued)

| Number of head | Classification (Overall Accuracy) | Retrieval (mAP) |
|---|---|---|
| DAN(6 sublayers) | 93.5% | 90.4% |
| DAN(8 sublayers) | 92.4% | 89.3% |

Table 2

| Method | Train Config | | Data Representation # Number of Views | Classification (overall Accuracy) | Retrieval (mAP) |
|---|---|---|---|---|---|
| | Pre train | Fine tune | | | |
| (1) SPH | - | - | - | 68.2% | 33.3% |
| (2) LFD | - | - | - | 75.5% | 40.9% |
| (3) 3D ShapeNets | ModelNet40 | ModelNet40 | Volumetric | 77. 30% | 49. 20% |
| (4) VoxNet | ModelNet40 | ModelNet40 | Volumetric | 83. 00% | |
| (5) MVCNN-MultiRes | - | ModelNet40 | Volumetric | 91. 40% | |
| (6) MVCNN, 12 x | ImageNetlK | ModelNet40 | 12 Views | 89. 90% | 70. 10% |
| (7) MVCNN, metric, 12 x | ImageNetlK | ModelNet40 | 12 Views | 89. 50% | 80. 20% |
| (8) MVCNN, 80x | ImageNetlK | ModelNet40 | 80 Views | 90. 10% | 70. 40% |
| (9) MVCNN, metric, 80x | ImageNetlK | ModelNet40 | 80 Views | 90. 10% | 79. 50% |
| (10) MVCNN (GoogLeNet), 12x | ImageNetlK | ModelNet40 | 12 Views | 92. 20% | 74. 10% |
| (11) MVCNN (GoogLeNet), metric, 12x | ImageNetlK | ModelNet40 | 12 Views | 92. 20% | 83. 00% |
| (12) GVCNN | - | ModelNet40 | 12 Views | 92. 60% | 81. 30% |
| (13) GVCNN | - | ModelNet40 | 8 Views | 93. 10% | 79. 70% |
| (14) GVCNN, metric, 12x | - | ModelNet40 | 12 Views | 92. 60% | 85. 70% |
| (15) PointNet | - | ModelNet40 | Point Cloud | 89. 20% | |
| (16) PointNet + + | - | ModelNet40 | Point Cloud | 90. 70% | |
| (17) PointCNN | - | ModelNet40 | Point Cloud | 91. 80% | |
| (18) PANORAMA-NN | - | ModelNet40 | PANORAMA-Views | 90. 70% | 83. 50% |
| (19) DAN (AlexNet), 12x | Alexnet | ModelNet40 | 12 Views | 93. 10% | 86. 20% |
| (20) DAN (VggNet), 12x | Vggnet | ModelNet40 | 12 Views | 93. 20% | 86. 10% |
| (21) DAN (ResNet), 12x | Resnet | ModelNet40 | 12 Views | 93. 40% | 86. 20% |
| (22) DAN (GoogLenet), 12x | GoogLenet | ModelNet40 | 12 Views | 93. 50% | 86. 40% |

The invention also provides a device of classifying and/or retrieving a three-dimensional model on basis of depth attention which comprises an acquisition module, a two-dimensional view group generation module, a two-dimensional view feature acquisition module, a fused feature generation module and a retrieval or classification module, wherein the acquisition module is configured for acquiring a three-dimensional model to be retrieved; the two-dimensional view group generation module is configured for mapping to generate a group of two-dimensional views according to the three-dimensional model to be retrieved, wherein the group of two-dimensional views comprises at least two two-dimensional views; the two-dimensional view feature acquisition module is configured for acquiring features of each two-dimensional view; the fused feature generation module is configured for fusing the features of all two-dimensional views via a depth attention network to form a fused feature; and the retrieval or classification module is configured for retrieving or classifying the three-dimensional model to be retrieved according to the fused feature.

It should be noted that the foregoing explanation of the method embodiment is also applicable to the device of the present embodiment and will not be described in detail herein.

The application also provides an electronic apparatus comprising a memory, a processor and a computer program stored in the memory and operable on the processor, wherein the processor, when executing the computer program, implements the method of classifying and/or retrieving the three-dimensional model on basis of depth attention as described above.

The application also provides a computer-readable storage medium storing a computer program, wherein the computer program, when executed by a processor, is capable of implementing a method of classifying and/or retrieving the three-dimensional model on basis of depth attention as described above.

Fig. 2 is an exemplary structure diagram of an electronic apparatus capable of implementing the method of classifying and/or retrieving a three-dimensional model on basis of depth attention according to an embodiment of the application.

As shown in Fig. 2, the electronic apparatus includes an input unit 501, an input interface 502, a central processor 503, a memory 504, an output interface 505, and an output unit 506. The input interface 502, the central processor 503, the memory 504 and the output interface 505 are connected to each other via a bus 507, and the input unit 501 and the output unit 506 are connected to the bus 507 via the input interface 502 and the output interface 505, respectively, and further connected to other components of the electronic apparatus. Specifically, the input unit 502 receives input information from the outside and transmits the input information to the central processor 503 through the input interface 502; the central processor 503 processes the input information based on computer executable instructions stored in the memory 504 to generate output information, temporarily or permanently stores the output information in the memory 504, and then transmits the output information to the output unit 506 through the output interface 505; and the output unit 506 outputs the output information to the outside of the electronic apparatus for use by the user.

That is, the electronic apparatus shown in Fig. 5 may also be implemented to include a memory storing computer executable instructions; and one or more processors that, when executing computer-executable instructions, may implement the method of classifying and/or retrieving the three-dimensional model on basis of depth attention described in connection with Fig. 1.

In an embodiment, the electronic apparatus shown in Fig. 2 may be implemented to include: a memory 504 configured to store executable program code; one or more processors 503 configured to run executable program code stored in the memory 504 to perform the adaptive playback terminal playback method in the embodiments described above.

In a typical configuration, a computing device includes one or more processors (CPUs), input/output interfaces, network interfaces, and internal storage.

The internal storage may include a non-volatile memory, a random access memory (RAM), and/or a non-volatile memory, such as a read only memory (ROM) or a flash RAM, in a computer-readable medium.

The internal storage is an example of the computer-readable medium.

The computer-readable media includes both permanent and non-permanent, removable and non-removable media that can be used to implement information storage by any method or technology. The information may be computer readable instructions, data structures, modules of a program, or other data. Examples of storage media for a computer include, but are not limited to, a phase change memory (PRAM), a static random access memory (SRAM), a dynamic random access memory (DRAM), other types of random access memory (RAM), a read only memory (ROM), an electrically erasable programmable read only memory (EEPROM), a flash memory or other memory technology, a compact disk read only memory (CD-ROM), a digital versatile disk (DVD) or other optical storage, magnetic cassette tapes, magnetic tape-magnetic disk storage or other magnetic storage devices, or any other non-transmission medium, which can be used to store information which can be accessed by the computing device.

Those skilled in the art will appreciate that embodiments of the present application may be provided as a method, a system, or a computer program product. Thus, the present application may take the form of an entire hardware embodiment, an entire software embodiment, or an embodiment combining software and hardware aspects. Moreover, the present application may take the form of a computer program product embodied on one or more computer-usable storage media (including, but not limited to, magnetic disk storage, CD-ROM, optical storage, and the like) having computer-usable program code embodied therein.

Furthermore, it is obvious that the word "comprising" does not exclude other elements or steps. A plurality of elements, modules or devices recited in a device claim may also be implemented by one element or master device in software or hardware. The first, second, etc. are used to identify names without identifying any particular order.

The flowcharts and block diagrams in the drawings illustrate architecture, functionality, and operation of possible implementations of systems, methods, and computer program products in accordance with various embodiments of the present application. In this regard, each block in the flowchart or block diagram block may represent a module, a program segment, or portion of code, which comprises one or more executable instructions for implementing the specified logical function(s). It should also be noted that in some alternative implementations, the functions noted in the blocks may occur differently than the order noted in the drawings. For example, two blocks identified in succession may, in fact, be executed substantially concurrently or they may sometimes be executed in the reverse order, depending upon the functionality involved. It is also noted that each block of the block diagrams and/or flowcharts, and combinations of blocks in the block diagrams and/or flowcharts, can be implemented by special purpose hardware-based systems which perform the specified functions or operations, or combinations of special purpose hardware and computer instructions.

The processor referred to in this embodiment may be a central processing unit (CPU) or other general purpose processor, a digital signal processor (DSP), an application specific integrated circuit (ASIC), a field-programmable gate array (FPGA) or other programmable logic device, discrete gate or transistor logic device, discrete hardware components, etc. The general purpose processor may be a microprocessor or the processor may be any conventional processor or the like.

The memory may be used to store computer programs and/or modules, and the processor may perform various functions of the device/terminal equipment by executing or executing the computer programs and/or modules stored in the memory, and invoking data stored in the memory. The memory mainly comprises a storage program area and a storage data area, wherein the storage program area can store an operating system, an application program (such as a sound playing function, an image playing function and the like) required by at least one function and the like; and the storage data area may store data (such as audio data, phone books, etc.) created according to the use of the mobile phone, etc. In addition, the memory may include a high speed random access memory, and may also include a non-volatile memory such as a hard disk, an internal storage, a plug-in hard disk, a smart media card (SMC), a secure digital (SD) card, a Flash Card, at least one disk storage device, a flash memory device, or other volatile solid state storage device.

In this embodiment, the device/terminal equipment integrated module/unit, if implemented in the form of a software functional unit and sold or used as a stand-alone product, may be stored in a computer-readable storage medium. Based on this understanding, the present invention implements all or part of the processes of the above-described embodiments and may also be implemented by instructing related hardware via the computer program, which is stored in a computer-readable storage medium, and when executed by a processor, performs the steps of the various method embodiments described above. Among other things, the computer program includes computer program code, which may be in the form of source code, object code, executable files, or some intermediate forms. The computer-readable medium may include: any entity or device capable of carrying computer program code, recording media, a U-disk, a removable hard disk, a magnetic disk, an optical disk, a computer memory, a read-only memory (ROM), a random access memory (RAM), electrical carrier wave signals, telecommunications signals, and software distribution media. It should be noted that the computer-readable medium may contain suitable additions and subtractions as required by legislation and patent practice within the jurisdiction. Although the present application has been disclosed in terms of preferred embodiments, it is not intended to limit the present application, and any person skilled in the art can make possible variations and modifications without departing from the spirit and scope of the present application. Therefore, the scope of protection of the present application should be determined by the scope of the claims of the present application.

In a typical configuration, a computing device includes one or more processors (CPUs), input/output interfaces, network interfaces, and internal storage.

The internal storage may include a non-volatile memory, a random access memory (RAM), and/or a non-volatile memory, such as a read only memory (ROM) or a flash RAM, in a computer-readable medium. The internal storage is an example of the computer-readable medium.

The computer-readable media includes both permanent and non-permanent, removable and non-removable media that can be used to implement information storage by any method or technology. The information may be computer readable instructions, data structures, modules of a program, or other data. Examples of storage media for a computer include, but are not limited to, a phase change memory (PRAM), a static random access memory (SRAM), a dynamic random access memory (DRAM), other types of random access memory (RAM), a read only memory (ROM), an electrically erasable programmable read only memory (EEPROM), a flash memory or other memory technology, a compact disk read only memory (CD-ROM), a digital versatile disk (DVD) or other optical storage, magnetic cassette tapes, magnetic tape-magnetic disk storage or other magnetic storage devices, or any other non-transmission medium, which can be used to store information which can be accessed by the computing device.

Those skilled in the art will appreciate that embodiments of the present application may be provided as a method, a system, or a computer program product. Thus, the present application may take the form of an entire hardware embodiment, an entire software embodiment, or an embodiment combining software and hardware aspects. Moreover, the present application may take the form of a computer program product embodied on one or more computer-usable storage media (including, but not limited to, magnetic disk storage, CD-ROM, optical storage, and the like) having computer-usable program code embodied therein.

Furthermore, it is obvious that the word "comprising" does not exclude other elements or steps. A plurality of elements, modules or devices recited in a device claim may also be implemented by one element or master device in software or hardware. The first, second, etc. are used to identify names without identifying any particular order.

The flowcharts and block diagrams in the drawings illustrate architecture, functionality, and operation of possible implementations of systems, methods, and computer program products in accordance with various embodiments of the present application. In this regard, each block in the flowchart or block diagram block may represent a module, a program segment, or portion of code, which comprises one or more executable instructions for implementing the specified logical function(s). It should also be noted that in some alternative implementations, the functions noted in the blocks may occur differently than the order noted in the drawings. For example, two blocks identified in succession may, in fact, be executed substantially concurrently or they may sometimes be executed in the reverse order, depending upon the functionality involved. It is also noted that each block of the block diagrams and/or flowcharts, and combinations of blocks in the block diagrams and/or flowcharts, can be implemented by special purpose hardware-based systems which perform the specified functions or operations, or combinations of special purpose hardware and computer instructions.

The processor referred to in this embodiment may be a central processing unit (CPU) or other general purpose processor, a digital signal processor (DSP), an application specific integrated circuit (ASIC), a field-programmable gate array (FPGA) or other programmable logic device, discrete gate or transistor logic device, discrete hardware components, etc. The general purpose processor may be a microprocessor or the processor may be any conventional processor or the like.

The memory may be used to store computer programs and/or modules, and the processor may perform various functions of the device/terminal equipment by executing or executing the computer programs and/or modules stored in the memory, and invoking data stored in the memory. The memory mainly comprises a storage program area and a storage data area, wherein the storage program area can store an operating system, an application program (such as a sound playing function, an image playing function and the like) required by at least one function and the like; and the storage data area may store data (such as audio data, phone books, etc.) created according to the use of the mobile phone, etc. In addition, the memory may include a high speed random access memory, and may also include a non-volatile memory such as a hard disk, an internal storage, a plug-in hard disk, a smart media card (SMC), a secure digital (SD) card, a Flash Card, at least one disk storage device, a flash memory device, or other volatile solid state storage device.

In this embodiment, the device/terminal equipment integrated module/unit, if implemented in the form of a software functional unit and sold or used as a stand-alone product, may be stored in a computer-readable storage medium. Based on this understanding, the present invention implements all or part of the processes of the above-described embodiments and may also be implemented by instructing related hardware via the computer program, which is stored in a computer-readable storage medium, and when executed by a processor, performs the steps of the various method embodiments described above. Among other things, the computer program includes computer program code, which may be in the form of source code, object code, executable files, or some intermediate forms. The computer-readable medium may include: any entity or device capable of carrying computer program code, recording media, a U-disk, a removable hard disk, a magnetic disk, an optical disk, a computer memory, a read-only memory (ROM), a random access memory (RAM), electrical carrier wave signals, telecommunications signals, and software distribution media. It should be noted that the computer-readable medium may contain suitable additions and subtractions as required by legislation and patent practice within the jurisdiction.

While the invention has been particularly described with reference to a general description and specific embodiments, it will be apparent to those skilled in the art that certain changes and modifications may be made thereto without departing from the spirit and scope of the invention. Accordingly, such modifications or improvements made without deviating from the spirit of the invention fall within the scope of protection by the invention

**Claims**

1. A method of classifying and/or retrieving a three-dimensional model on basis of depth attention, **characterized in that** the the method of classifying and/or retrieving the three-dimensional model on basis of depth attention comprises the steps of:

    acquiring a three-dimensional model to be retrieved;
    mapping to generate a group of two-dimensional views according to the three-dimensional model to be retrieved, wherein the group of two-dimensional views comprises at least two two-dimensional views;
    acquiring features of each two-dimensional view;
    fusing the features of all two-dimensional views via a depth attention network to form a fused feature; and
    retrieving or classifying the three-dimensional model to be retrieved according to the fused feature.

2. The method of classifying and/or retrieving the three-dimensional model on basis of depth attention according to claim 1, **characterized in that** the mapping to generate a group of two-dimensional views according to the three-dimensional model to be retrieved, the group of two-dimensional views comprising at least two two-dimensional views, comprises:

    extracting two-dimensional views of the three-dimensional model at different angles and/or distances by using a phong algorithm, and extracting features of each view by using a GoogleNet network.

3. The method of classifying and/or retrieving the three-dimensional model on basis of depth attention according to claim 2, **characterized in that** the extracting two-dimensional views of the three-dimensional models at different angles and/or distances by using the phong algorithm, and extracting features of each view by using a GoogleNet network comprises:

generating views by a three-dimensional phong reflection algorithm, wherein the views are placed at intervals of $\theta$=30 around an axis in a perpendicular direction at an angle of 30 degrees with the ground plane, with each camera pointing to the centroid of the grid.

4. The method of classifying and/or retrieving the three-dimensional model on basis of depth attention according to claim 3, **characterized in that** the depth attention network comprises n processing layers; a first processing layer is a convolution layer, a last processing layer is called a splicing layer, and other processing layers are called self-attention layers.

5. The method of classifying and/or retrieving the three-dimensional model on basis of depth attention according to claim 4, **characterized in that** the fusing the features of all two-dimensional views via a depth attention network to form a fused feature comprises:

stacking all the self-attention layers, wherein one self-attention layer is connected with the convolution layer to serve as a first self-attention layer, and one self-attention layer is connected with the splicing layer to serve as a last self-attention layer; except the first self-attention layer, the input of each self-attention layer is equal to the sum of the input and the output of a previous layer, and the splicing layer is configured for acquiring the sum of the input and the output of the last self-attention layer; wherein,

the convolution layer is configured for acquiring a feature matrix according to the features of all the two-dimensional views;

the splicing layer is configured for splicing the sum of the input and the output of the last self-attention layer into the fused feature;

the first self-attention layer performs following operations to acquire the sum of the input and the output of the present layer:

acquiring a self-defined weight matrix of the present layer, wherein the self-defined weight matrix comprises $W_i^Q$, $W_i^K$ and $W_i^v$;

acquiring the feature matrix output by the convolution layer;

acquiring a weight matrix of the present layer according to the feature matrix, and the self-defined weight matrix $W_i^Q$ and $W_i^K$ of the present layer by the softmax function;

generating a self-attention feature matrix of the present layer according to the weight matrix, the self-defined weight matrix $W_i^v$ of the present layer and the feature matrix;

adding the self-attention feature matrix of the present layer and the feature matrix to obtain the sum of the input and the output of the present layer;

each of other self-attention layers except the first self-attention layer perform following operations to acquire the sum of the input and the output:

acquiring the sum of the input and the output of a previous self-attention layer;

acquiring a self-defined weight matrix of the present layer, wherein the self-defined weight matrix comprises $W_i^Q$, $W_i^K$ and $W_i^v$;

acquiring a weight matrix of the present layer according to the sum of the input and the output of the previous self-attention layer and the self-defined weight matrix $W_i^Q$ and $W_i^K$ of the present layer by the softmax function;

generating a self-attention feature matrix of the present layer according to the weight matrix and the self-defined weight matrix $W_i^v$ of the present layer and the sum of the input and the output of the previous self-attention layer; and

adding the self-attention feature matrix of the present layer and the sum of the input and the output of the previous self-attention layer to obtain the sum of the input and the output of the present layer.

6. The method of classifying and/or retrieving the three-dimensional model on basis of depth attention according to claim 5, **characterized in that** the generating a self-attention feature matrix of the present layer according to the weight matrix and the self-defined weight matrix $W_i^v$ of the present layer and the feature matrix comprises:

   generating a self-attention feature matrix of the present layer by multiplying the weight matrix, the self-defined weight matrix $W_i^v$ and the feature matrix;
   the generating a self-attention feature matrix of the present layer according to the weight matrix and the self-defined weight matrix $W_i^v$ of the present layer and the sum of the input and the output of the previous self-attention layercomprises:
   generating the self-attention feature matrix of the present layer by multiplying the weight matrix, the self-defined weight matrix $W_i^v$ and the sum of the input and the output of the previous self-attention layer.

7. The method of classifying and/or retrieving the three-dimensional model on basis of depth attention according to claim 1, **characterized in that** the retrieving or classifying the three-dimensional model to be retrieved according to the fused feature comprises:

   inputting the fused feature into a trained classifier to acquire a classification label; or
   inputting the fused feature into a preset database to find a three-dimensional model corresponding to the feature matched with the fused feature from the preset database.

8. A device of classifying and/or retrieving three-dimensional model on basis of depth attention, **characterized in that** the device of classifying and/or retrieving the three-dimensional model on basis of depth attention comprises:

   an acquisition module configured for acquiring a three-dimensional model to be retrieved;
   a two-dimensional view group generation module configured for mapping to generate a group of two-dimensional views according to the three-dimensional model to be retrieved, wherein the group of two-dimensional views comprises at least two two-dimensional views;
   a two-dimensional view feature acquisition module configured for acquiring features of each two-dimensional view;
   a fused feature generation module configured for fusing the features of all two-dimensional views via a depth attention network to form a fused feature; and
   a retrieval or classification module configured for retrieving or classifying the three-dimensional model to be retrieved according to the fused feature.

9. An electronic apparatus comprising a memory, a processor and a computer program stored in the memory and operable on the processor, **characterized in that** the processor, when executing the computer program, implements the method of classifying and/or retrieving the three-dimensional model on basis of depth attention according to any one of claims 1 to 8.

10. A computer-readable storage medium storing a computer program, **characterized in that** the computer program, when executed by a processor, is capable of implementing the method of classifying and/or retrieving the three-dimensional model on basis of depth attention according to any one of claims 1 to 8.

| Acquiring a three-dimensional model to be retrieved | 1 |

| Mapping to generate a group of two-dimensional views according to the three-dimensional model to be retrieved, wherein the group of two-dimensional views comprises at least two two-dimensional views | 2 |

| Acquiring features of various two-dimensional views | 3 |

| Fusing the features of various two-dimensional views via a depth attention network to form a fused feature | 4 |

| Retrieving or classifying the three-dimensional model to be retrieved according to the fused feature | 5 |

Fig. 1

Fig. 2

Europäisches
Patentamt

European
Patent Office

Office européen
des brevets

## EUROPEAN SEARCH REPORT

**Application Number**

EP 21 18 0769

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HE XINWEI ET AL: "View N-Gram Network for 3D Object Retrieval", 2019 IEEE/CVF INTERNATIONAL CONFERENCE ON COMPUTER VISION (ICCV), IEEE, 27 October 2019 (2019-10-27), pages 7514-7523, XP033723396, DOI: 10.1109/ICCV.2019.00761 [retrieved on 2020-02-24] * section 4 * * section 3 * * figure 2 * | 1-10 | INV. G06K9/62 G06K9/00 |
| X | NIE WEIZHI ET AL: "DAN: Deep-Attention Network for 3D Shape Recognition", IEEE TRANSACTIONS ON IMAGE PROCESSING, IEEE, USA, vol. 30, 13 April 2021 (2021-04-13), pages 4371-4383, XP011851065, ISSN: 1057-7149, DOI: 10.1109/TIP.2021.3071687 [retrieved on 2021-04-20] * figure 2 * * section III.A * * section III.B * * section III.C * | 1,8-10 | |
| A | LI ZIRUI ET AL: "MPAN: Multi-Part Attention Network for Point Cloud Based 3D Shape Retrieval", IEEE ACCESS, IEEE, USA, vol. 8, 22 August 2020 (2020-08-22), pages 157322-157332, XP011807270, DOI: 10.1109/ACCESS.2020.3018696 [retrieved on 2020-09-03] * section III * * figure 1 * | 1-10 | TECHNICAL FIELDS SEARCHED (IPC)  G06K |

-----

-/--

The present search report has been drawn up for all claims

| Place of search | Date of completion of the search | Examiner |
|---|---|---|
| The Hague | 9 December 2021 | Angelopoulou, Maria |

EPO FORM 1503 03.82 (P04C01)

page 1 of 2

Europäisches
Patentamt

European
Patent Office

Office européen
des brevets

## EUROPEAN SEARCH REPORT

Application Number

EP 21 18 0769

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU WANG ET AL: "Attention Models for Point Clouds in Deep Learning: A Survey", ARXIV.ORG, CORNELL UNIVERSITY LIBRARY, 201 OLIN LIBRARY CORNELL UNIVERSITY ITHACA, NY 14853, 22 February 2021 (2021-02-22), XP081889868, * the whole document * | 1-10 | |

TECHNICAL FIELDS
SEARCHED      (IPC)

The present search report has been drawn up for all claims

| Place of search | Date of completion of the search | Examiner |
|---|---|---|
| The Hague | 9 December 2021 | Angelopoulou, Maria |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

page 2 of 2